# EUROPEAN PATENT APPLICATION

(11) **EP 2 182 660 A1**
(43) Date of publication of application: **05.05.2010**
(21) Application number: 09174039.9
(22) Date of filing: 26.10.2009
(51) Int. Cl.: H04B 13/00

(54) **Communication device**

(30) Priority: 31.10.2008 JP 2008280861
(71) Applicant: Alps Electric Co., Ltd., Tokyo 145-8501 (JP)
(72) Inventor: Shibata, Etsuya, Tokyo Tokyo 145-8501 (JP)
(74) Representative: Klunker, Hans-Friedrich

(57) **Abstract**

A communication device having high convenience for a user is provided. A communication device (2) for communicating with an external device (50) using a biological body (40) as a signal transmission path, includes a display section (4) exposed in an outward direction from a personal item (42) of the biological body and displaying information about the biological body, an attachment section (14) connected to the display section (4) and attached to the personal item while facing the biological body, a signal electrode (22) disposed on the attachment section, capacitively coupled to the biological body, and transmitting or receiving a signal to or from the external device, and a GND electrode (28) disposed on the display section (4) and capacitively coupled to the external device through the ground.

## Description

### Cross Reference to Related Application

The present invention contains subject matter related to Japanese Patent Application JP 2008-280861 filed in the Japanese Patent Office on Oct. 31, 2008, the entire contents of which being incorporated herein by reference.

### BACKGROUND

### 1. Technical Field

The present invention relates to a communication device that communicates with an external device using electric field coupling.

### 2. Related Art

In general, RFID (Radio Frequency Identification), infrared communication, and short-range radio communication schemes besides wired communication for communication devices are known (for example, see Patent Document 1). Since non-contact communication may be performed by a radio wave, communication devices are utilized in various situations of, for example, an event site, a station ticket gate, and the like.

On the other hand, since devices using the radio wave are regulated by law and are easily affected by interference or obstruction from other devices, a new communication technique using electric field coupling has been disclosed (for example, see Patent Document 2).
[Patent Document 1] Japanese Unexamined Patent Application Publication No. 2001-188471
[Patent Document 2] Japanese Patent No. 4074661

According to the technique of the above-described Patent Document 2, various problems caused by the radio wave and the like in Patent Document 1 may be solved. However, the concreteness of a degree to which users can actually make use is still lacking, and this point still remains as a problem.

### SUMMARY

It is desirable to provide a communication device having high convenience for a user.

According to a first invention, there is provided a communication device for communicating with an external device using a biological body as a signal transmission path, including: a display section exposed in an outward direction from a personal item of the biological body and displaying information about the biological body; an attachment section connected to the display section and attached to the personal item while facing the biological body; a signal electrode disposed on the attachment section, capacitively coupled to the biological body, and transmitting or receiving a signal to or from the external device; and a GND electrode disposed on the display section and capacitively coupled to the external device through the ground.

According to the first invention, the communication device uses the biological body as a signal transmission path when communication with the external device is performed, and includes the signal electrode and the GND electrode.

The signal electrode of the communication device is capacitively coupled to the biological body and transmits or receives a signal to or from the external device. On the other hand, the GND electrode of the communication device is capacitively coupled to the external device through the ground, thereby forming a closed loop as a whole.

As compared to related techniques using an RFID or short-range radio communication, the present invention may connect the communication device to the external device by allowing a person to be in contact with the external device or by natural action such as holding or the like, omit a troublesome operation for inserting into a reader, and facilitate use. Security may also be guaranteed without external leaking of information from the biological body. Since a communication distance is short and no radio wave is emitted, the power consumption of the communication device is reduced.

The GND electrode exposed in the outward direction from the personal item of the biological body is disposed on the display section, while the signal electrode is disposed on the attachment section attached to the personal item while facing the biological body. Since the signal electrode is closer to the biological body than the GND electrode, the efficiency of communication is improved. Since the communication device also has a function of displaying information about the biological body, convenience is increased.

According to a second invention in the configuration of the first invention, an insulating layer having a uniform thickness capable of securing a distance between the signal electrode and the GND electrode may be provided between the signal electrode and the GND electrode.

According to the second invention in addition to the operation of the first invention, the distance between the signal electrode and the GND electrode is secured by providing the insulating layer. Since the thickness of the insulating layer is uniform, the efficiency of communication is further improved.

According to a third invention in the configuration of the second invention, a circuit board functioning as a transmitter or a receiver may be disposed on the insulating layer.

According to the third invention in addition to the operation of the second invention, the communication device may be miniaturized when the circuit board functioning as the transmitter or the receiver may be disposed on the insulating layer.

According to a fourth invention in the configurations of the first to third inventions, the display section is exposed in an outward direction from clothing of a human body and displays information about the human body, and the attachment section is connected to the display section and attached to the clothing while facing the human body and is not exposed outward.

According to the fourth invention in addition to the operations of the first to third inventions, the communication device has a function of a so-called nametag and the display section is exposed in the outward direction from the clothing of the human body, but the attachment section attached to the clothing is not exposed outward. That is, since it is difficult for the GND electrode disposed on the display section and the signal electrode disposed on the attachment section to be simultaneously connected by a finger, communication is not interfered with.

According to a fifth invention in the configurations of the first to fourth inventions, the communication device may use an electric field generated by applying a voltage to the biological body and communicate with the external device using a surface of the biological body as a signal transmission path.

According to the fifth invention in addition to the operations of the first to fourth inventions, the communication device uses the electric field generated by applying the voltage to the biological body and communicates with the external device using the surface of the biological body as the signal transmission path, so that the signal electrode or the GND electrode may perform non-contact communication without making direct contact with the skin of the biological body. Since the sweat of the biological body or the like does not affect communication and communication may be performed without making contact with the external device as long as it is close to the external device, general versatility also increases.

The present invention can provide a communication device that is configured to display information about a biological body and has high convenience for a user.

### BRIEF DESCRIPTION OF THE DRAWINGS

Fig. 1 is a view of a state in which a communication device is mounted according to this embodiment.
Fig. 2 is a perspective view of the communication device of Fig. 1 viewed from the backside.
Fig. 3 is a front view of the communication device of Fig. 1 viewed from the upper side.
Fig. 4 is a cross-sectional view taken along the line IV-IV of Fig. 3.
Fig. 5 is a schematic configuration view of the communication device of Fig. 1.
Fig. 6 is a schematic configuration view of an external device that communicates with the communication device of Fig. 1.

### DESCRIPTION OF EXEMPLARY EMBODIMENTS

Hereinafter, a preferred embodiment of the present invention will be described on the basis of the drawings.

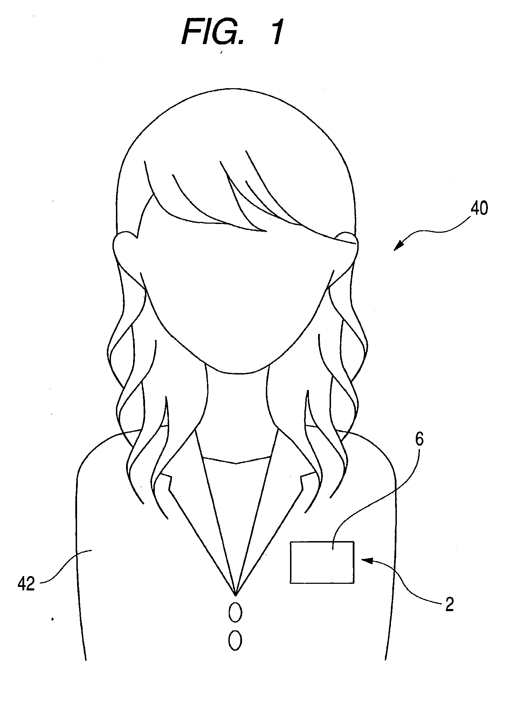

A communication device 2 of the embodiment is mounted on a human body 40, and is attached to a personal item of a visitor, for example, a breast pocket of clothing 42 as shown in Fig. 1.

The communication device 2 of this embodiment is a transmitter, and is configured in the form of a tag capable of displaying a name of the visitor or indicating the visitor.

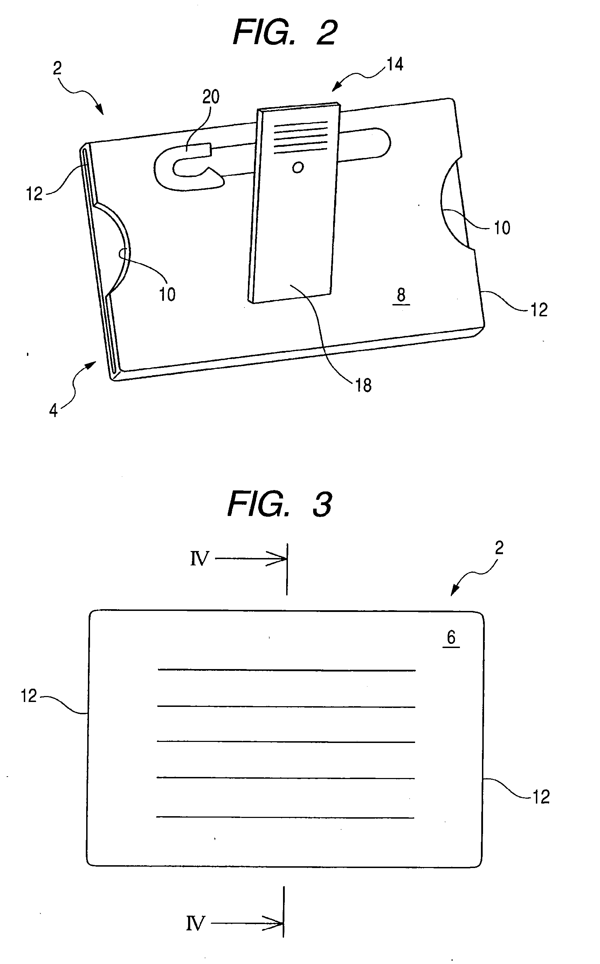

More specifically, the transmitter 2 has a tubular nametag case (display section) 4 as shown in Fig. 2. The case 4 is a plastic material, which has a transparent or semitransparent display surface 6. As shown in Fig. 3, the display surface 6 is configured in an approximately rectangular shape having a given area. The display surface 6 of the approximately rectangular shape is more exposed than the clothing 42 in an outward direction (Fig. 1).

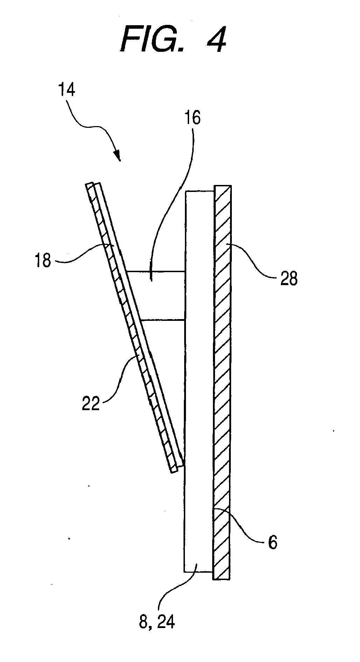

A backside (insulating layer) 8 is disposed on the opposite side of the display surface 6, that is, on the side of the human body 40, and the display surface 6 and the backside 8 are connected at upper and lower end portions thereof. Narrow and long openings 12 and 12 are formed in both left and right end portions of the case 4 in a vertical direction. The backside 8 of this embodiment has a uniform thickness (Fig. 4) and a distance between an output electrode (signal electrode) 22 and a GND electrode 28 described later is formed to be long.

Again returning to Fig. 2, in the backside 8, concave portions 10 and 10 are respectively connected and formed to the openings 12 and 12. The concave portions 10 and 10 may be in contact with a name card of a visitor or paper on which the word "visitor" is written.

Accordingly, the paper may be output and input between the opening 12 of one side and the opening 12 of the other side. Content of the paper disposed inside the case 4 may be viewed from the outside through the display surface 6.

The backside 8 is connected to the attachment section 14 of the plastic material.

As shown in Fig. 4, the attachment section 14 of this embodiment has a shaft 16 extended to the side of the human body 40. The shaft 16 has a front end directly connected to the backside 8, for example, using an adhesive. The shaft 16 may be connected to the backside 8 through a mount.

On the other hand, a clip 18 extended in the vertical direction is provided at a back end of the shaft 16. When an upper end portion of the clip 18 is pressed to the backside 8 as shown in Fig. 4, a lower end portion of the clip 18 is separated from the backside 8. Thereby, a visitor borrowing the nametag transmitter 2 lowers the transmitter 2 to the breast pocket in a state in which the lower end portion of the clip 18 is separated from the backside 8 and then releases the pressure strength to the upper end portion of the clip 18, thereby clipping the breast pocket by the lower end portion of the clip 18 and the backside 8. This clip 18 faces the human body 40 through the clothing 42 and is hidden inside the breast pocket.

Although not shown for convenience of illustration in Fig. 4, a safety pin 20 is also provided at the shaft 16 (Fig. 2). When the transmitter 2 is attached to the clothing 42, the visitor may select either the clip 18 or the pin 20.

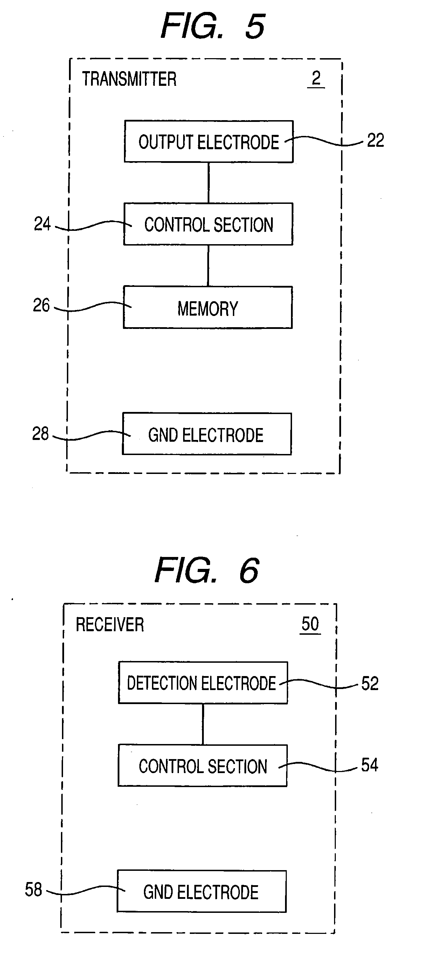

Here, the transmitter 2 of this embodiment uses the surface of the human body 40, not the inside of the human body 40, as a signal transmission path, and communicates with a receiver (external device) 50 later described with reference to Fig. 6.

Specifically, as shown in Fig. 5, the transmitter 2 has the output electrode 22 for human body communication. The output electrode 22 of this embodiment is attached to an opposite side to a side of the clip 18 facing the backside 8, that is, the side of the human body 40 (Fig. 4). The output electrode 22 is electrically connected to a control section (circuit board) 24 at a transmitting side.

The control section 24 of this embodiment is disposed at a proper position within the backside 8, and outputs a transmission signal to the output electrode 22, for example, in a uniform interrupt period. At this time, the output electrode 22 is operated by generating a potential signal.

The transmitter 2 has a memory 26. The memory 26 stores a unique ID (identification signal) of the case 4.

The control section 24 outputs communication information, that is, a transmission signal in which the unique ID is modulated in this embodiment, to the output electrode 22.

Here, assuming that the control section 24 has applied a positive charge voltage to the output electrode 22, an electric field occurs in the output electrode 22. The transmission signal from the electrode 22 is transmitted through the clothing 42 and reaches the human body 40. The negative charge is induced on the human body 40 around the output electrode 22 so that the output electrode 22 becomes the positive electrode (electric field coupling).

Accordingly, the positive charge is induced on the human body 40 around the receiver 50 and the electric field occurs in the human body 40.

The receiver 50 has a detection electrode 52 for human body communication (Fig. 6), which detects the electric field occurring in the human body 40. A sensing element of the electrode 52 converts a detection signal into an electric signal.

The detection electrode 52 is electrically connected to a control section 54 at a receiving side. The control section 54 demodulates the detection signal and identifies whether or not a received ID is a formal ID. When the received ID has been identified as the formal ID, the case 4 is specified, so that a given process is performed using obtained communication information.

By the way, the electric field coupling from the output electrode 22 to the detection electrode 52 through the human body 40 has a signal line, but the transmitter 2 has a reference line that is electric field coupled to the receiver 50 through the ground. The signal line and the reference line form one closed loop.

More specifically, first, the transmitter 2 has the GND electrode 28 for human body communication (Fig. 5).

As shown in Fig. 4, the GND electrode 28 of this embodiment is attached to an opposite side to a side of the display surface 6 facing the backside 8, that is, the above-described outer side. The GND electrode 28 is electric field coupled to the ground (not shown) and becomes the negative electrode in this embodiment.

On the other hand, as shown in Fig. 6, the receiver 50 also has a GND electrode 58 for human body communication. The GND electrode 58 is electric field coupled to the ground.

The electric field coupling from the GND electrode 58 of the receiver 50 to the GND electrode 28 of the transmitter 2 through the air or ground has a reference line. As such, in human body communication of an electrolysis scheme that uses an electric field generated by applying a voltage to the human body 40 and uses the surface of the human body 40 as the signal transmission path as in this embodiment, the human body 40 is used only as the signal line, but is not used as the reference line.

As such, when communication with the receiver 50 is performed, the transmitter 2 of this embodiment uses the surface of the human body 40, which is a dielectric body, as the signal transmission path and has the output electrode 22 and the GND electrode 28.

The output electrode 22 of the transmitter 2 is electric field coupled to the human body 40 and is able to transmit a signal to the receiver 50. On the other hand, the GND electrode 28 of the transmitter 2 is electric field coupled to the ground and is electric field coupled to the GND electrode 58 of the receiver 50 through the ground. These form a closed loop as a whole.

Accordingly, as compared to related techniques using an RFID, infrared communication, or short-range radio communication, the present invention may connect the transmitter 2 to the receiver 50 by allowing a person to be in contact with the external device or by natural action such as holding or the like, omit a troublesome operation of inserting into a reader, and facilitate use. Since the radio is transmitted several meters even in a weak radio wave and is transmitted in all directions, communication information may be easily intercepted. However, in this embodiment, security is guaranteed without external leaking of information from the surface of the human body 40. Since a communication distance is short and no radio wave is emitted, the power consumption of the transmitter 2 is reduced.

The GND electrode 28 of the transmitter 2 is disposed on the nametag case 4 exposed outward from the clothing 42 of the human body 40, while the output electrode 22 of the transmitter 2 is disposed on the attachment section 14 attached to the clothing 42 while facing the human body 40. Since the output electrode 22 is disposed to be closer to the human body 40 than the GND electrode 28, the efficiency of communication is improved. Since the transmitter 2 also has a function of displaying a name of the human body, convenience is increased.

A distance between the output electrode 22 and the GND electrode 28 may secure a longer distance than, for example, a distance in a card type communication device by providing an insulating layer by the backside 8 having the concave portion 10. Since the thickness of the backside 8 is uniform, the efficiency of communication is further improved.

When the control section 24, which functions as the transmitter 2, is disposed on the backside 8, the transmitter 2 can be miniaturized.

Except for a point of time when the nametag transmitter 2 is attached to the breast pocket of the clothing 42, it is difficult to cause a short circuit associated with a simultaneous connection of the GND electrode 28 disposed on the case 4 and the output electrode 22 disposed on the attachment section 14 by a finger, and therefore communication is not interfered with.

When the area of the output electrode 22 may be increased to that of the case 4, electric capacitance by electric field coupling may be increased.

The transmitter 2 uses the electric field scheme, that is, an electric field generated by applying a voltage to the human body 40, and uses the surface of the human body 40 as the signal transmission path. Since a signal of the scheme may be transmitted through the clothing 42 or shoes, the output electrode 22 or the GND electrode 28 may perform non-contact communication without making direct contact with the skin of the human body 40. Accordingly, since the sweat of the human body 40 or the like does not affect communication and communication may be performed without making contact with the receiver 50 as long as it is close to the receiver 50, general versatility also increases.

The present invention is not limited to the above-described embodiment. Various changes and variations may be made insofar as they are within the scope of the claims. For example, configurations of the above-described embodiment may be partially omitted or arbitrarily combined to be different from the above.

The nametag case 4 or the attachment section 14 of the embodiment is the plastic material, which is separately attached to the output electrode 22 or the GND electrode 28. When the case 4 or the attachment section 14 is a metal material, the electrodes 22 and 28 may be integrated with the case 4 or the attachment section 14.

The display section according to the embodiment of the present invention may have a function of displaying vital signs, such as blood pressure, pulse, breathing, and body temperature, as well as the nametag function. The attachment section according to the embodiment of the present invention may be attached to all other personal items attached to the human body 40 as well as the clothing 42.

The communication device according to the embodiment of the present invention is not limited to the configuration using a unique ID of the case 4 and, for example, may perform user authentication or personal identification of the human body 40 by inserting an IC card into the case 4.

In the above-described embodiment, an example in which the transmitter 2 is provided on the human body 40 has been described, but a receiver may be provided on the human body 40.

Specifically, when a detection electrode is disposed on the clip 18 and, for example, a reproduction circuit is provided on the control section 24 of the backside 8, the voice audio transmitted from the transmitter may be received and the voice audio may be reproduced at the side of the human body 40.

On the other hand, both the output electrode and the detection electrode may be disposed on the clip 18. In this case, the communication device may have functions of both the transmitter and the receiver when transmission and reception are switched by a switch.

The present invention is surely not limited to the human body 40, and may be applied to a biological body including the human body 40 as long as communication using charging characteristics is performed.

When the electric field scheme of the above-described embodiment is used, the sweat or the like does not affect communication and the general versatility also increases. An electric current scheme may be used in which a biological body serves as a signal line and a reference line.

## Claims

1. A communication device (2) for communicating with an external device (50) using a biological body (40) as a signal transmission path, comprising:
a display section (4) exposed in an outward direction from a personal item (42) of the biological body (40) and displaying information about the biological body (40);
an attachment section (14) connected to the display section (4) and attached to the personal item (42) while facing the biological body (40);
a signal electrode (22) disposed on the attachment section (14), capacitively coupled to the biological body (40), and transmitting or receiving a signal to or from the external device (50); and
a GND electrode (28) disposed on the display section (4) and capacitively coupled to the external device (50) through the ground.

2. The communication device (2) according to claim 1, **characterized in that** an insulating layer (8) having a uniform thickness capable of securing a distance between the signal electrode (22) and the GND electrode (28) is provided between the signal electrode (22) and the GND electrode (28).

3. The communication device (2) according to claim 2, **characterized in that** a circuit board (24) functioning as a transmitter or a receiver is disposed on the insulating layer (8).

4. The communication device (2) according to any one of claims 1 to 3, **characterized in that** the display section (4) is exposed in an outward direction from clothing (42) of a human body (40), and displays information about the human body (40), and
the attachment section (14) is connected to the display section (4) and attached to the clothing (42) while facing the human body (40), and is not exposed outward.

5. The communication device (2) according to any one of claims 1 to 4, **characterized in that** the communication device (2) uses an electric field generated by applying a voltage to the biological body (40) and communicates with the external device (50) using a surface of the biological body (40) as a signal transmission path.
